# EUROPÄISCHE PATENTANMELDUNG

(11) **EP 1 288 775 A2**
(43) Veröffentlichungstag der Anmeldung: **05.03.2003**
(21) Anmeldenummer: 02019063.3
(22) Anmeldetag: 28.08.2002
(51) Int. Cl.: G06F 3/12

(54) **Verfahren zur Ermittlung bestimmter Abweichungen zwischen Druckerresourcen und den Erfordernissen eines Druckauftrags**

(30) Priorität: 04.09.2001 US 317325 P
(71) Anmelder: Heidelberger Druckmaschinen Aktiengesellschaft, 69115 Heidelberg (DE)
(72) Erfinder: Jackelen, Jeffrey A., Pittsford, NY 14534 (US); Tompking, Michael P., Rochester, NY 14624 (US)
(74) Vertreter: Franzen, Peter

(57) **Zusammenfassung**

Ein Verfahren zur Ermittlung von nach Beginn des Renderns des Druckauftrags, jedoch vor Beendigung des Renderns festgestellten Abweichungen zwischen den Attributen eines Druckauftrags und den Druckerressourcen und -eigenschaften sieht vor, dass die Abweichung ermittelt wird, der Druckauftrag in einen Abweichungsstatus versetzt wird und der Bediener über die Benutzerschnittstelle informiert wird, dass auf einer bestimmten Seite ein bestimmtes Problem aufgetreten ist.

## Beschreibung

Die vorliegende Erfindung betrifft allgemein Verfahren und Abläufe für den elektrografischen Digitaldruck. Insbesondere betrifft die Erfindung Verfahren zur Ermittlung von während der Ausführung des Druckauftrags, d.h. nach Beginn des Renderns des Druckauftrags durch den Raster-Image-Prozessor, auftretenden Abweichungen aufgrund von Inkompatibilitäten zwischen Attributen des Druckauftrags und Druckerressourcen oder -eigenschaften.

Zur erfolgreichen Ausführung eines Druckauftrags müssen die verfügbaren Druckerressourcen und -eigenschaften alle Attribute des Druckauftrags, z.B. spezifizierte Mediumseigenschaften und Weiterverarbeitungsvorgänge, unterstützen. Dies bedeutet z.B., dass der Drucker die erforderliche Schriftart unterstützen, über Druckmedien des korrekten Formats und der richtigen Farbe verfügen und mit der erforderlichen Weiterverarbeitungsvorrichtung zur Durchführung der notwendigen Weiterverarbeitungsvorgänge verbunden sein muss. Wenn die von einem Druckauftrag spezifizierten Attribute von dem Drucker nicht unterstützt werden, besteht ein Abweichungsstatus, aufgrund dessen der Drucker nicht in der Lage ist, den Druckauftrag auf die vom Kunden gewünschte Weise auszuführen. Dies führt dazu, dass der Drucker entweder nicht in der Lage ist, den Druckauftrag überhaupt auszuführen, oder ihn auf Papier eines anderen Formats oder einer anderen Farbe oder ohne Heftung oder Lochung der fertigen Exemplare druckt.

Eine derartige Abweichung führt zu Zeitverschwendung, wenn der Druckauftrag nicht ausgeführt werden kann und die Druckauftragsattribute oder Druckerressourcen neu konfiguriert werden müssen, oder zu Zeit- und Geldverschwendung, wenn der Druckauftrag auf das falsche Medium oder aber mit falschen Weiterverarbeitungsschritten oder ganz ohne Weiterverarbeitungsschritte gedruckt wird und daher insgesamt neu gedruckt werden muss. Hinzu kommt, dass das Rendern mittels des Raster-Image-Prozessors ein zeitaufwändiger Vorgang ist. Daher überprüfen viele Digitaldrucker automatisch vor der Initialisierung des Renderings, ob Abweichungen bestehen. Außerdem überprüfen viele Drucker zur Vermeidung von Materialverschwendung nach dem Rendern, aber vor dem Druckvorgang des gerenderten Bilds, ob Abweichungen bestehen.

Nicht alle Abweichungen können vor dem Rastern ermittelt werden, da sich z.B. die Druckerressourcen während des Renderns des Druckauftrags ändern können, ein Drucker den Druckauftrag rendert und den Druckvorgang beginnt, bevor der Rendervorgang für den gesamten Druckauftrag beendet ist oder in manchen Druckaufträge u.U. nicht alle erforderlichen Druckerressourcen vor der ersten Seite, d.h. im Druckauftragsvorsignal oder Header, genannt sind. Daher besteht die Gefahr, dass eine Abweichung zwischen den Druckerressourcen und den Auftragsattributen erst entdeckt wird, wenn der Auftrag schon teilweise gerendert ist. Im Lauf des Renderns wird deutlich, dass der gesamte Druckauftrag nicht korrekt gedruckt werden wird, da ein Abweichungsstatus besteht, der vor dem Rendervorgang nicht ermittelt wurde. Danach bedeutet ein weiteres Rendern eine Verschwendung von Zeit- und Druckprozessorressourcen.

Es folgen einige Beispiele für spezifische, erst bei der Ausführung des Druckauftrags ermittelte Abweichungen, wobei die vorliegende Liste jedoch nicht abschließend ist. Es kann z.B. eine inakzeptable Kombination von Materialformaten auftreten, die an eine Weiterverarbeitungsvorrichtung geleitet wird, die diese bestimmte Kombination nicht verarbeiten kann, wenn z.B. Exemplare im Ledger-Format von an einen Broschürenvorrichtung geleitet werden, nachdem vorherige Seiten des Druckauftrags Exemplare im Letter-Format spezifiziert haben. Die Broschürenvorrichtung ist nicht in der Lage, eine derartige Formatkombination zu verarbeiten, d.h. es besteht eine Abweichung. In diesem Beispiel hat z.B. das Vorsignal bzw. der Header des Druckauftrags Medien im Letter-Format spezifiziert, während einzelne Seiten des Druckauftrags Medien im Ledger-Format spezifizieren. Ein zweites Beispiel für während der Ausführung des Druckauftrags auftretende Abweichungen besteht z.B. dann, wenn ein inakzeptables Medienformat an eine Weiterverarbeitungsvorrichtung geleitet wird, die nicht in der Lage ist, Medien des abgefragten Formats zu verarbeiten, z.B. wenn der Druckauftrag vorgibt, dass eine Seite im Ledger-Format an eine Heftvorrichtung geleitet werden soll, die nicht in der Lage ist, Medien im Ledger-Format zu verarbeiten. Ein drittes Beispiel ergibt sich, wenn ein Druckauftrag eine Weiterverarbeitungsvorrichtung abfragt, die an dem Drucker nicht installiert ist, d.h. wenn z.B. eine bestimmte Seite an eine Broschürenvorrichtung geleitet werden soll, an dem Drucker jedoch keine Broschürenvorrichtung installiert ist. Schließlich kann eine bei der Ausführung des Druckauftrags ermittelte Abweichung auch entstehen, wenn ein Weiterverarbeitungsvorgang abgefragt wird, den die Weiterverarbeitungsvorrichtung, an die die Seite geleitet wird, nicht leisten kann, d.h. wenn z.B. eine an eine Stapelvorrichtung geleitete Seite einen Heftvorgang erfordert, die Stapelvorrichtung aber keine Heftoption vorsieht.

Gegenwärtig gibt es drei mögliche Reaktionen, wenn ein aktuell verfügbarer Drucker während des Rendervorgangs eine Abweichung ermittelt. Alle drei Optionen haben ihre Nachteile. Erstens kann der Drucker die Ursache der Abweichung ignorieren. In diesem Falle wird die Abfrage des Auftragsautors ignoriert, ohne dass dem Bediener des Druckers ein diesbezüglicher Hinweis gegeben wird. Dies wird bei dem Kunden zweifellos Enttäuschung hervorrufen, wenn einige der Seiten auf Medien des falschen Formats gedruckt wurden. Zweitens kann der Drucker die Abweichung ignorieren. Dies führt mit einiger Wahrscheinlichkeit zu einem Papierstau, da die Abweichung wahrscheinlich die Zufuhr inakzeptabler Medien zu einer Vorrichtung verursacht, die nicht in der Lage ist, Medien dieses Formats zu verarbeiten. Eine dritte Option ist der Abbruch des Druckauftrags. Diese Option hat den Nachteil, dass der Bediener keine Informationen bezüglich des Auftragsstatus, z.B. einen Grund für den Abbruch des Renderns, erhält. Wenn es sich um einen Drucker handelt, bei dem der Druckvorgang beginnt, bevor der Rendervorgang beendet ist, besteht sogar die Gefahr, dass der Bediener annimmt, die vor dem Abbruch gedruckten Seiten bildeten den gesamten Druckauftrag, und den unfertigen Auftrag als fertigen Auftrag an den Kunden schickt.

Demgemäß besteht Bedarf an einem Verfahren zur Ermittlung von bei der Ausführung eines Druckauftrags ermittelten Abweichungen und zur Information des Druckerbedieners, so dass die Abweichung ohne die Verschwendung von Zeit und Druckerressourcen beseitigt werden kann.

Die vorliegende Erfindung löst dieses und andere Probleme von Digitaldruckern des Standes der Technik durch die Bereitstellung eines Verfahrens zur Ermittlung von Abweichungen während des Renderns eines Druckauftrags und durch die Information des Bedieners über Auftreten und Art der ermittelten Abweichung. Bei Ermittelung einer derartigen Abweichung wird erfindungsgemäß der Rendervorgang des Druckauftrags abgebrochen, der Druckauftrag wird in einen Abweichungsstatus versetzt, und auf der Benutzerschnittstelle erscheint eine Nachricht, die den Bediener darüber informiert, dass auf einer bestimmten Seite ein bestimmtes Problem ermittelt wurde.

Weitere Merkmale der vorliegenden Erfindung werden in der nachfolgenden Beschreibung bevorzugter Ausführungsformen anhand der nachfolgend aufgeführten Figuren näher erläutert.

Es zeigen:
- Fig. 1: eine schematische Darstellung eines zur Umsetzung der Erfindung verwendeten Digitaldruckers;
- Fig. 2: ein Ablaufdiagramm einer Ausführungsform der Erfindung.

Zum besseren Verständnis werden in der vorliegenden Beschreibung bestimmte Begriffe nach den folgenden Definitionen verwendet: Die Bezeichnungen "Raster" oder "rastern" sind abgeleitet vom lateinischen Wort "rastrum" für "Rechen" und beziehen sich auf ein Verfahren zur Wiedergabe eines Bilds in Form eines zweidimensionalen Pixelgitters. Die Bezeichnungen "Druckauftrag" oder "Auftrag" beziehen sich auf eine Sammlung von Seiten in einem Seitenbeschreibungssprachenformat (Page Description Language, PDL) wie z.B. PostScript oder PCL, oder auf ein komprimiertes Bildformat wie z.B. CCITT, die "Auftragsattribute" enthält, d.h. Anweisungen an den Raster-Image-Prozessor bezüglich der Ausführung des Druckauftrags, z.B. auf Medien welchen Formats und welcher Farbe der Auftrag gedruckt werden soll, welche Schriftart gewählt werden soll usw. Die Bezeichnung "Raster-Image-Prozessor" oder "RIP" bezieht sich auf eine Sammlung von Programmen, die einen im PDL-Format vorliegenden Auftrag in eine Reihe gerasterter Bilder und Mediendeskriptoren zur Durchführung des Druckvortrags übersetzen. "Rendern" bezieht sich auf die Erstellung eines gerasterten oder "gerenderten" Bilds mit Mediendeskriptoren für eine einzelne Seite eines Druckauftrags. Der erste Teil des an den RIP geleiteten Druckauftrags wird als "Druckauftragsvorsignal" oder "Druckauftragsheader" bezeichnet und enthält eine Reihe von besonders formatierten Befehlen zur Definition der Druckauftragsattribute. Ein Druckauftrag hat einen "Auftragszyklus", der in verschiedene "Auftragsstadien" unterteilt werden kann. Das erste Auftragsstadium beginnt mit dem Eintreffen des Druckauftrags im Drucker und kann als Vorwartestadium bezeichnet werden. Für die Zwecke der vorliegenden Erläuterungen ist das wichtigste Auftragsstadium der "Abweichungsstatus", der eintritt, wenn zwischen den Auftragsattributen und den vorhandenen Druckerressourcen oder -eigenschaften eine Abweichung auftritt.

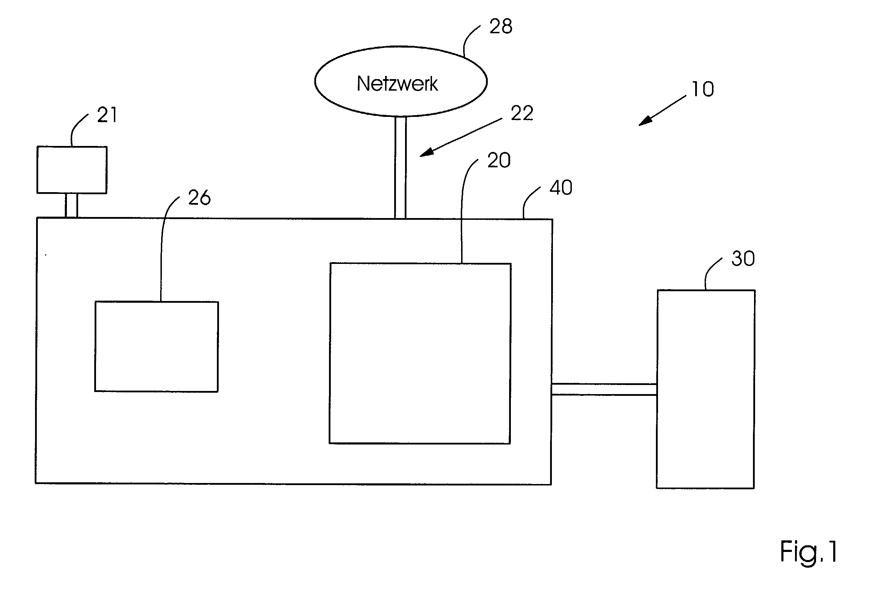

Fig. 1 zeigt ein typisches Drucksystem 10, in dem die vorliegende Erfindung umgesetzt wird. Es umfasst einen Drucker 20 mit einer Benutzerschnittstelle 21 und einer Netzwerkschnittstelle 22, die den Drucker 20 mit einem Netzwerk 28 verbindet. Der Drucker 20 umfasst einen Raster-Image-Prozessor 26, der aus dem Netzwerk 28 Daten erhält. Der Drucker 20 umfasst weiterhin eine Markierungsvorrichtung 40, die eine Vielzahl verfügbarer Medienvorräte und andere z.B. zur Produktion von Druckbildern auf Ausgabepapier notwendige Papierhandhabungs- und -bearbeitungsausrüstung enthält. Außerdem kann der Drucker 20 mit einer oder mehreren Weiterverarbeitungsvorrichtungen 30 verbunden sein, z.B. mit einer Heft-, Stapel-, Broschürenvorrichtung oder einer Lochvorrichtung für Dreifachlochung usw.

Das dargestellte Drucksystem 10 ist als Netzwerkdrucksystem dazu eingerichtet, über eine Netzwerkverbindung Ferneingaben zu erhalten. Es sind jedoch im Rahmen der Erfindung auch andere Konfigurationen denkbar und möglich. Z.B. kann das Drucksystem als ein freistehender Drucker ausgebildet sein, der einen Scanner für eine Bildeingabe vor Ort umfasst. Außerdem kann der Drucker mit einer Scannerstation verbunden sein, an der das berechnete Layout vor dem Druckvorgang zur Überprüfung durch den Bediener angezeigt wird. Obwohl hier eine bestimmte Druckerkonfiguration erläutert wird, kann die vorliegende Erfindung selbstverständlich auch in anderen Drucksystemkonfigurationen eingesetzt werden. Darüber hinaus erstreckt sich die vorliegende Erfindung auch auf elektrografische Kopierer, obwohl in der gesamten Beschreibung die Bezeichnung "Drucker" verwendet wird. Die Bezeichnung "Drucker" schließt hier Kopierer mit ein.

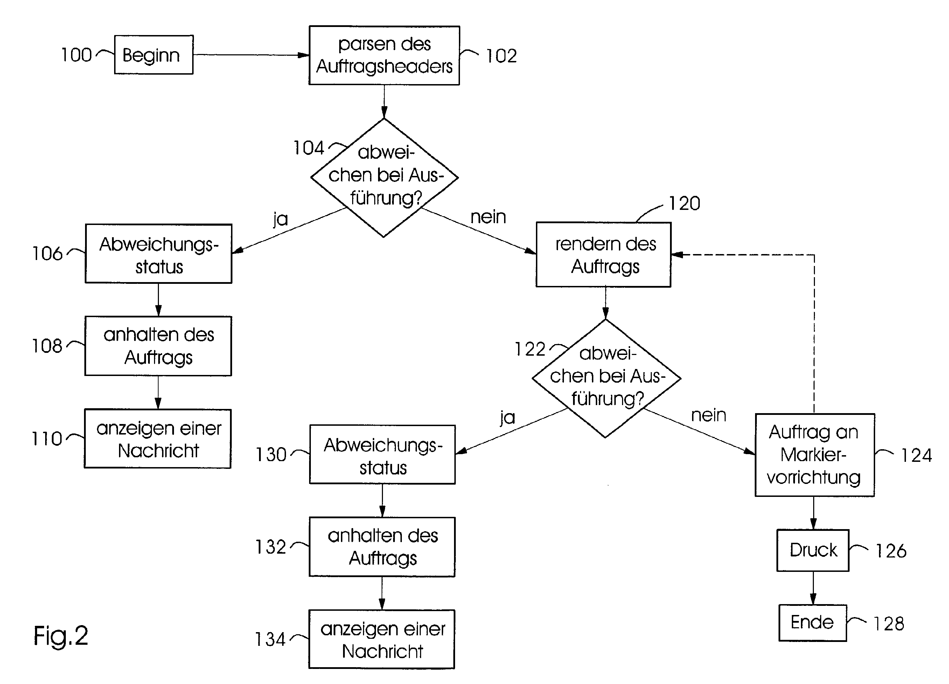

Eine bevorzugte Ausführungsform des erfindungsgemäßen Verfahrens zeigt das in Fig. 2 dargestellte Ablaufdiagramm. In einem Schritt 100 empfängt der Drucker einen Druckauftrag aus dem Netzwerk. In einem Schritt 102 wird das Druckauftragsvorsignal bzw. der Druckauftragsheader geparst und die Auftragsattribute werden ermittelt. Der Schritt 104 umfasst eine Überprüfung auf Inkompatibilitäten vor der Ausführung, die abfragt, ob eine Abweichung zwischen den im Auftragsheader spezifizierten Druckauftragsattributen und den verfügbaren Druckerressourcen und -eigenschaften besteht. Diese Überprüfung erfolgt in der Praxis als eine Reihe von Abfragen, jeweils eine an jedes im Auftragsheader spezifizierte Auftragsattribut, um zu ermitteln, ob der Drucker in der Lage ist, das betreffende Attribut zu unterstützen. Wenn auf irgendeine der im Schritt 104 erfolgten Abfragen eine negative Antwort eingeht, wird in einem Schritt 106 ein Abweichungsstatus vor Ausführung generiert, in einem Schritt 108 der Druckauftrag angehalten und in einem Schritt 110 erscheint an der Benutzerschnittstelle des Druckers eine Nachricht, welche das Vorhandensein und die Art der Abweichung anzeigt.

Wenn auf die Abfragen im Schritt 104 nur positive Antworten eingehen, wird in einem Schritt 120 jede Seite des Auftrags einzeln gerendert. Während des Renderns der einzelnen Seiten wird in einem Schritt 122 wird für jede Seite abgefragt, ob eine Abweichung zwischen den Attributen der einzelnen Seiten und den Druckerressourcen und - eigenschaften besteht. Wenn keine Abweichungen festgestellt werden, wird die Seite in einem Schritt 124 zum Drucken an die Markiervorrichtung geleitet, und die Schritte 120,122 und 124 werden für jede einzelne Seite wiederholt. Wenn auf keiner Seite eine Abweichung ermittelt wurde, wird nach dem Rendern und der Weiterleitung des Auftrags an die Markiervorrichtung der gesamte Druckauftrag in einem Schritt 126 gedruckt und in einem Schritt 128 beendet. Alternativ können die Seiten auch während des Renderns entweder einzeln oder in Seitengruppen gedruckt werden, statt vor dem Drucken des Auftrags alle Seiten zu rendern.

Wenn dagegen eine Abweichung ermittelt wird, erzeugt ein Schritt 130 einen Status "Abweichung bei Ausführung". In einem Schritt 132 wird der Druckauftrag angehalten und das Rendern abgebrochen, ohne dass die übrigen Seiten des Druckauftrags gerendert werden. In einem Schritt 134 wird an der Benutzerschnittstelle des Druckers eine Nachricht angezeigt, die den Bediener über das Auftreten und die Art des Abweichungsstatus informiert.

Im Falle von Abweichungen bei der Ausführung des Auftrags erfordert die Fehlerbehebung in der Regel eine Änderung der Auftragsattribute in der Weise, dass diese mit den verfügbaren Druckerressourcen übereinstimmen, sowie ein vollständiges erneutes Rendern des Druckauftrags. Die Möglichkeit der Fehlerbehebung durch den Bediener ist also abhängig von den Fähigkeiten des jeweiligen Druckers. Wenn z.B. der Drucker eine Veränderung von Druckauftragsattributen durch den Bediener ermöglicht, kann der Bediener nun die Attribute rekonfigurieren, und der Druckauftrag kann erneut gerendert und fertig gedruckt werden. Wenn der Drucker einem Bediener die Möglichkeit bietet, zur Behebung der Abweichung die Auftragsattribute zu ändern, so kann diese Änderung ebenfalls erfolgen. Die Schritte 104, 106 und 108 und bei Bedarf Schritt 110 werden anschließend wiederholt, bis keine Abweichung mehr festgestellt wird, woraufhin der gesamte Druckauftrag gerendert und an die Markiervorrichtung geleitet wird.

Wenn jedoch der Drucker keine Veränderung der Auftragsattribute durch den Bediener über die Benutzerschnittstelle unterstützt, kann der Bediener die Abweichung nicht beheben und muss den Auftrag zurück an den Autor schicken, damit dieser die Abweichung behebt. Die vorliegende Erfindung erleichtert dies insofern, als die auf der Benutzerschnittstelle dargestellte Nachricht dem Bediener die notwendigen Informationen liefert, um dem Auftragsautor genau über die Art der Abweichung zu informieren, so dass der Autor die Auftragsattribute oder den Auftragsheader zur Behebung der Abweichung verändern kann.

Der zur Umsetzung der Erfindung verwendete Software-Code ist diesen Ausführungen im Anhang beigefügt, kann jedoch in einem kurzen Beispiel zusammengefasst werden. Zum Verständnis des nachfolgenden Beispiels sind einige Definitionen nötig. Eine "log_i18n message" ist eine zur Benachrichtigung des Bedieners über einen bestimmten Zustand über eine Benutzerschnittstelle oder eine Logdatei verwendete Funktion. Die Funktion "isLegalPage" überprüft, ob es sich bei dem Seitenformat um ein verfügbares Format handelt, d.h. ob das Seitenformat von dem Drucker unterstützt wird und ob ein entsprechender Vorrat vorhanden ist. Diese Funktion überprüft jeden Seitenheader, um spezifizierte Medienformate zu ermitteln, die der Drucker nicht unterstützt. Der Code für die Funktion "isLegalPage" ist in Tabelle I dargestellt.

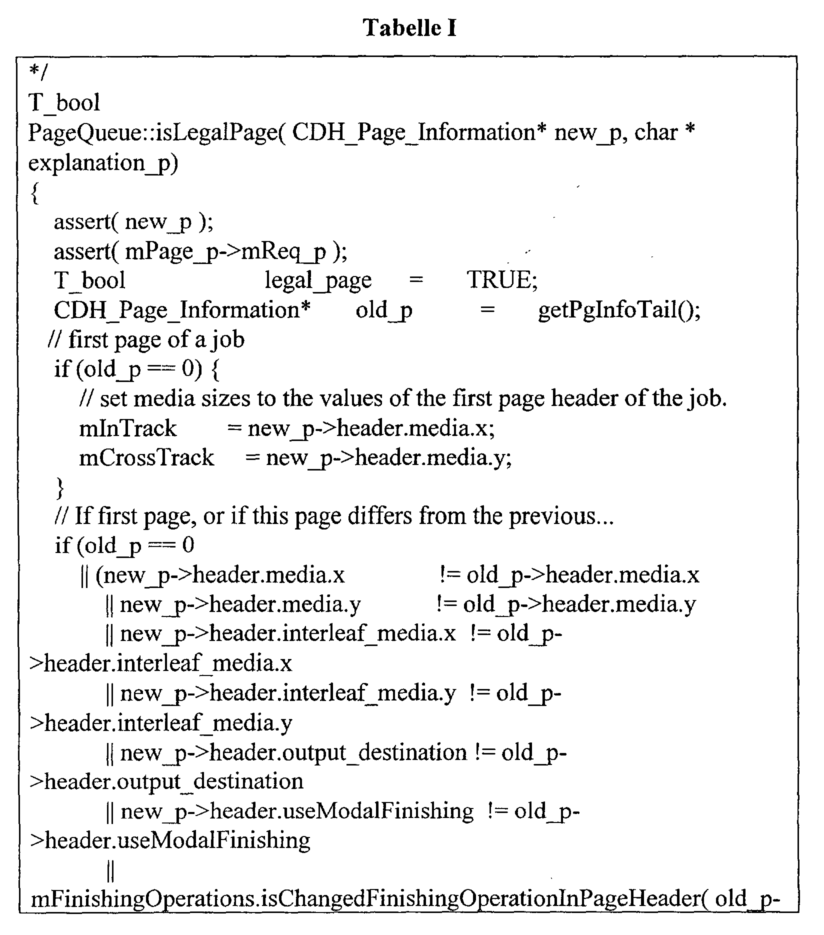

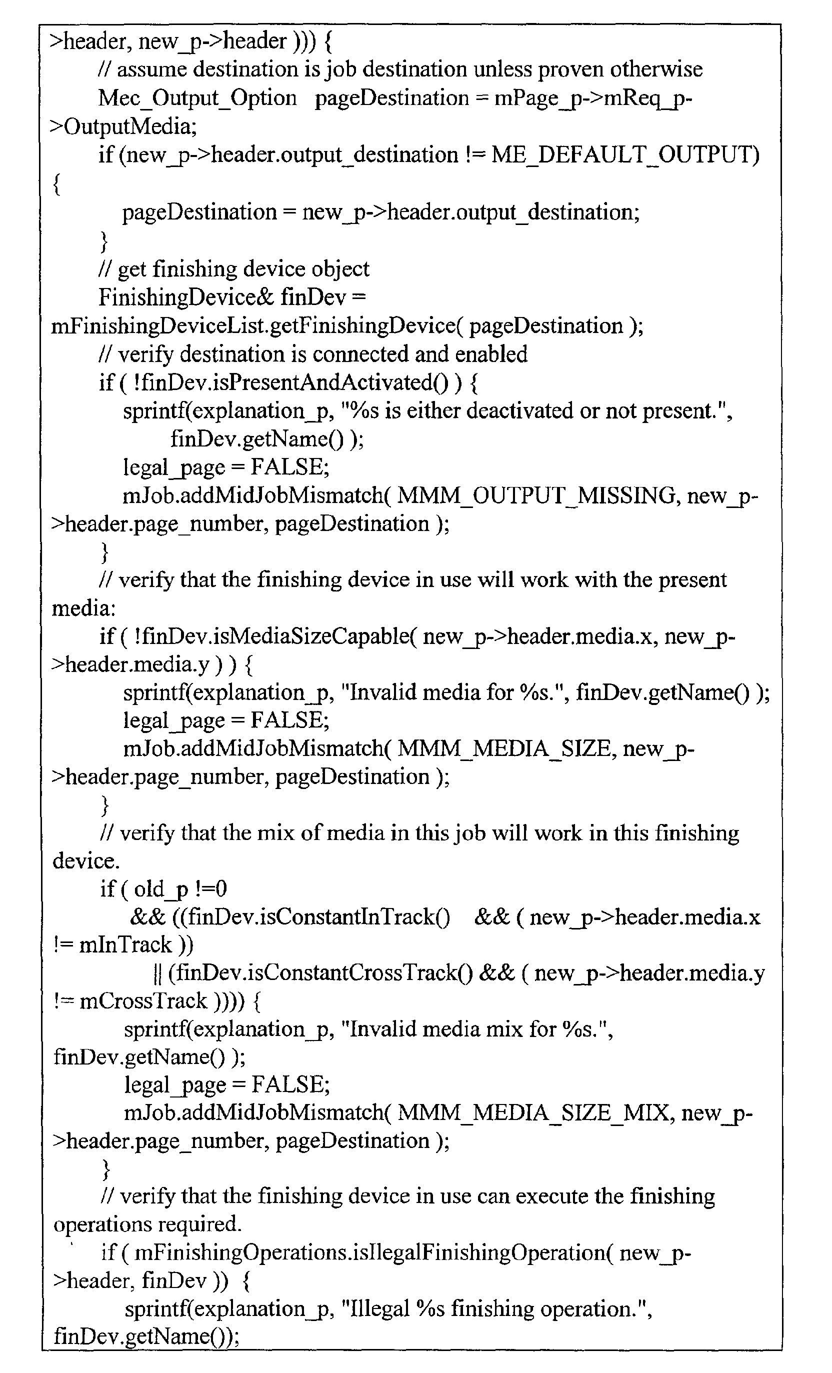

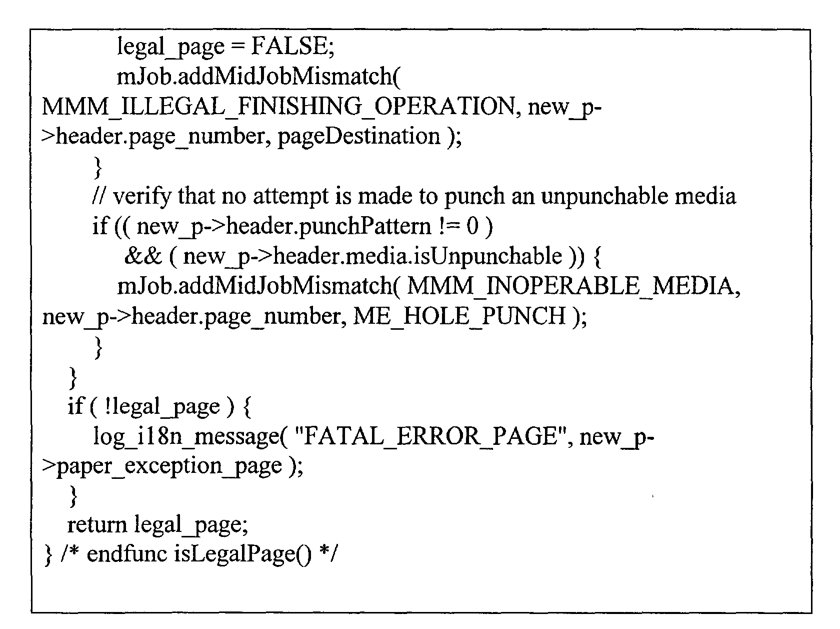

Die Funktion "isLegalFinishingOperation" überprüft, ob eine Seite eine bestimmte Weiterverarbeitungsvorrichtung oder einen bestimmten Weiterverarbeitungsvorgang spezifiziert, die bzw. den der Drucker nicht unterstütz. Der Code für die Funktion "isLegalFinishingOperation" ist in Tabelle II dargestellt.

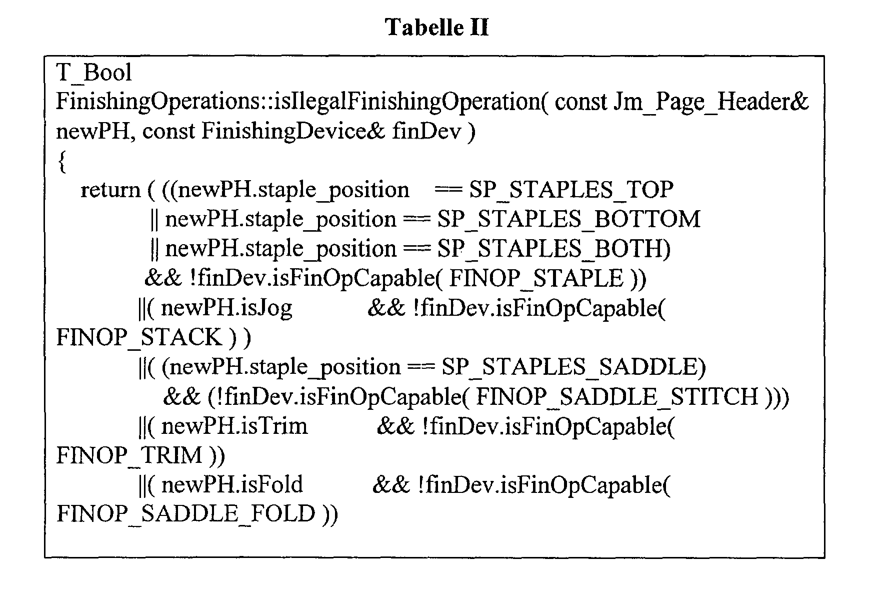

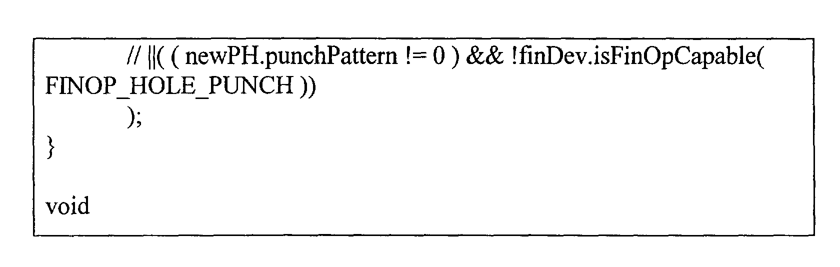

Die Funktion "addMidJobMismatch" schließlich erfasst die Art der Abweichung und die Seite, auf der die Abweichung auftritt. Diese Funktion ist der erste Schritt einer Reihe von Funktionen und Abläufen, die schließlich zur Anzeige einer Nachricht an der Benutzerschnittstelle führen. Der Code für die Funktion "addMidJobMismatch" ist in Tabelle III dargestellt:

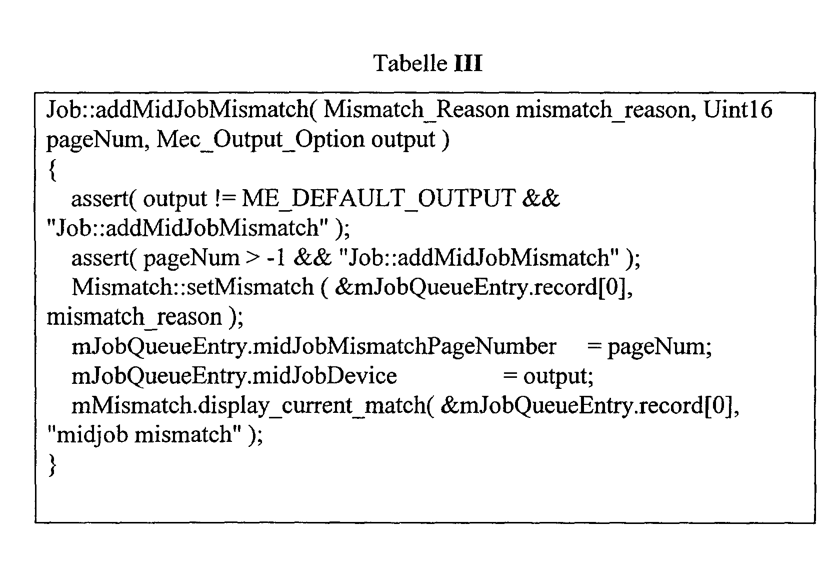

### Bezugszeichenliste

- 10: Drucksystem
- 20: Druckmaschine
- 21: Benutzerschnittstelle
- 22: Netzwerkschnittstelle
- 26: Raster-Image-Prozessor
- 28: Netzwerk
- 30: Weiterverarbeitungsvorrichtungen
- 40: Markierungsvorrichtung
- 100-134: Verfahrenschritt

## Patentansprüche

1. Ein Verfahren zur Ermittlung von während der Ausführung des Druckauftrags auftretenden Abweichungen mit den Schritten:
- Erkennen einer Abweichung zwischen Druckauftragsattributen des Druckauftrags und den verfügbaren Resourcen des Druckers während der Ausführung des Druckauftrags,
- Aussetzen des Druckauftrags bis zur Auflösung der Abweichung und
- Erkennen der Auflösung der Abweichung und
- Wiederaufnahme des Druckauftrages

2. Ein Verfahren gemäß Anspruch 1 mit dem weitern Schritt:
- Anzeigen eines Hinweises bezüglich des Vorhandenseins und der Art der Abweichung an einer Benutzerschnittstelle.

3. Ein Verfahren gemäß einem der Ansprüche 1 bis 2 wobei die Wiederaufnahme des Druckauftrages folgendes beinhaltet:
- Rendern der verbliebenen Seiten des Druckauftrages; und
- Senden der verbliebenen Seiten des Druckauftrages an eine Druckmaschine um den Druckauftrag zu beenden.

4. Ein Verfahren gemäß einem der Ansprüche 1 bis 2 wobei die Wiederaufnahme des Druckauftrages folgendes beinhaltet:
- wiederholtes Rendern des Druckauftrages; und
- Senden des Druckauftrages an eine Druckmaschine um den Druckauftrag zu beenden.

5. Verfahren zur Ermittlung von während der Ausführung eines Druckauftrags auftretenden Abweichungen mit den Schritten:
- Erhalten eines Druckauftrages,
- einzelnes Rendern jeder Seite des Druckauftrages,
- Für jede Seite: Bestimmen, ob es eine Abweichung zwischen den Druckauftragsattributen des Druckauftrages, die die gerenderte Seite verwendet und den verfügbaren Resourcen der Druckmaschine gibt,
- Erkennen einer Abweichung zwischen mindestens einer der gerenderten Seiten und den zur Verfügung stehenden Resourcen der Druckmaschine;
- Anhalten der Druckmaschine bis die Abweichgung aufgelöst ist; und
- Rendern der verbliebenen Seiten des Druckauftrages.

6. Verfahren nach dem Anspruch 5, wobei das Erkennen der Auflösung der Abweichung folgenden Schritt umfasst:
- Erkennen einer Rekonfiguration von wenigstens einem Druckauftragsattribut des Druckauftrages.

7. Verfahren nach dem Anspruch 5, wobei das Erkennen der Auflösung der Abweichung folgenden Schritt umfasst:
- Rücksenden des Druckauftrages an den Autor zur Behebung der Abweichung,
- Erhalten eines neuen Druckauftrages

8. Das Verfahren gemäß einem der Ansprüche 5 bis 7 mit dem weiteren Verfahrensschritt:
- Anzeigen eines Hinweises bezüglich des Vorhandenseins und / oder der Art der Abweichung an einer Benutzerschnittstelle.

9. Verfahren zur Ermittlung von während der Ausführung eines Druckauftrags auftretenden Abweichungen mit den Schritten:
- Erhalten eines Druckauftrages,
- Parsen eines Druckauftragsvorsignals des Druckaufrags um die Druckauftragsattribute die der Druckauftrag verwendet zu bestimmen;
- Bestimmen, das keine Abweichung zwischen den Druckauftragsattributen, die in dem Druckauftragsvorsignal spezifiziert sind und den verfügbaren Resourcen der Druckmaschine besteht;
- Rendern von wenigstens einer Seite des Druckauftrages;
- Erkennen einer Abweichung zwischen mindestens einer der gerenderten Seiten und den zur Verfügung stehenden Resourcen der Druckmaschine;
- Anhalten der Druckmaschine bis die Abweichgung aufgelöst ist;
- Anzeigen eines Hinweises bezüglich des Vorhandenseins und / oder der Art der Abweichung an einer Benutzerschnittstelle;
- Erkennen eine Veränderung von wenigstens einem Druckauftragsattribut des Druckauftrages; und
- Wiederaufnahme des Druckauftrages um den kompletten Druckauftrag zu vervollständigen.

10. Verfahren nach dem Anspruch 9, wobei die Wiederaufnahme des Druckauftrages folgenden Schritt umfasst:
- Rendern der verbliebenen Seiten des Druckauftrages.

11. Verfahren nach dem Anspruch 9, wobei die Wiederaufnahme des Druckauftrages folgenden Schritt umfasst:
- wiederholtes Rendern des Druckauftrages; und
- Drucken des Druckauftrges

12. Computerlesbares Medium, auf dem Anweisungen gespeichert sind, um einer zentrale Steuerungseinheit die Ausführung eines Verfahrens gemäß einem der Ansprüche 1 bis 11 zu erlauben.
